# FASCICULE DE BREVET EUROPEEN

(11) **EP 2 606 626 B1**
(45) Date de publication et mention de la délivrance du brevet: **03.04.2019**
(21) Numéro de dépôt: 11758501.8
(22) Date de dépôt: 12.08.2011
(51) Int. Cl.: H04L 29/06

(54) **TRAITEMENT DE TRANSFERT DE COMMUNICATION EN MODE SIP**
VERARBEITUNG EINER KOMMUNIKATIONSÜBERGABE IN EINEM SIP-MODUS
PROCESSING COMMUNICATION HANDOVER IN AN SIP MODE

(30) Priorité: 17.08.2010 FR 1056634
(43) Date de publication de la demande: 26.06.2013
(73) Titulaire: Orange, 75015 Paris (FR)
(72) Inventeur: HASPEKIAN, Goar, F-75012 Paris (FR); MOHALI, Marianne, F-92400 Courbevoie (FR); JAFFUEL, Stephen, F-92130 Issy Les Moulineaux (FR)
(86) Numéro de dépôt international: PCT/FR2011/051911
(87) Numéro de publication internationale: WO 2012/022909

(56) Documents cités:
- EP-A1- 2 093 968
- EP-A1- 2 202 934
- US-A1- 2008 037 447

## Description

L'invention se situe dans le domaine des télécommunications, et plus particulièrement celui de la téléphonie sur IP dite "Voix sur IP " (pour "Voice over IP" en anglais).

Le réseau IP (pour "Internet Protocol") devient de plus en plus le support universel d'une multitude de services et applications. C'est le réseau fédérateur adopté par les opérateurs pour mutualiser leurs offres de services hétérogènes

La téléphonie sur IP permet avantageusement, d'une part, une réduction du coût des communications téléphoniques par rapport à la téléphonie classique, et d'autre part, le couplage de la téléphonie avec les fonctions et services de l'informatique et des réseaux IP.

La téléphonie sur IP permet également la mise en oeuvre de fonctions, déjà présentes sur le réseau téléphonique commuté (RTC). Une telle fonction est par exemple un service de transfert de communication permettant à un interlocuteur appelé par un interlocuteur appelant, de transférer l'appel vers un troisième interlocuteur.

Le transfert est dit "consultatif" si l'interlocuteur appelé engage une communication avec cet autre interlocuteur avant de le mettre en relation avec l'interlocuteur appelant.

Le transfert est dit "aveugle" si la mise en relation est commandée sans consultation. Le transfert "aveugle" permet un gain de temps et est souvent utilisé dans les standards téléphoniques, tel qu'un standard téléphonique d'une entreprise ou encore dans les centres d'appels.

Dans les réseaux, par exemple les réseaux de VoIP (pour "voix sur IP"), utilisant le protocole de signalisation SIP (pour "Session Initiation Protocol") standardisé par l'IETF (pour "Internet Engineering Task Force" en anglais), le service de transfert "aveugle" est réalisé par la mise en oeuvre d'une méthode appelée "REFER".

De façon connue, le protocole SIP permet d'initier, de modifier et de terminer des sessions multimédia. Une fois la négociation réussie entre un interlocuteur appelant et un interlocuteur appelé, les deux interlocuteurs peuvent échanger des flux média, par exemple voix ou vidéo, grâce à l'activation d'un protocole de transport de données, par exemple le protocole RTP (pour "Real-time Transport Protocol"). Le protocole SIP gère uniquement des messages de signalisation et non les messages de données d'une session multimédia. Les paramètres des sessions multimédias sont pré-négociés via les messages de signalisation SIP. Ces paramètres sont principalement les adresses de terminaison et les numéros des ports qui seront utilisés par les deux extrémités pour établir la communication.

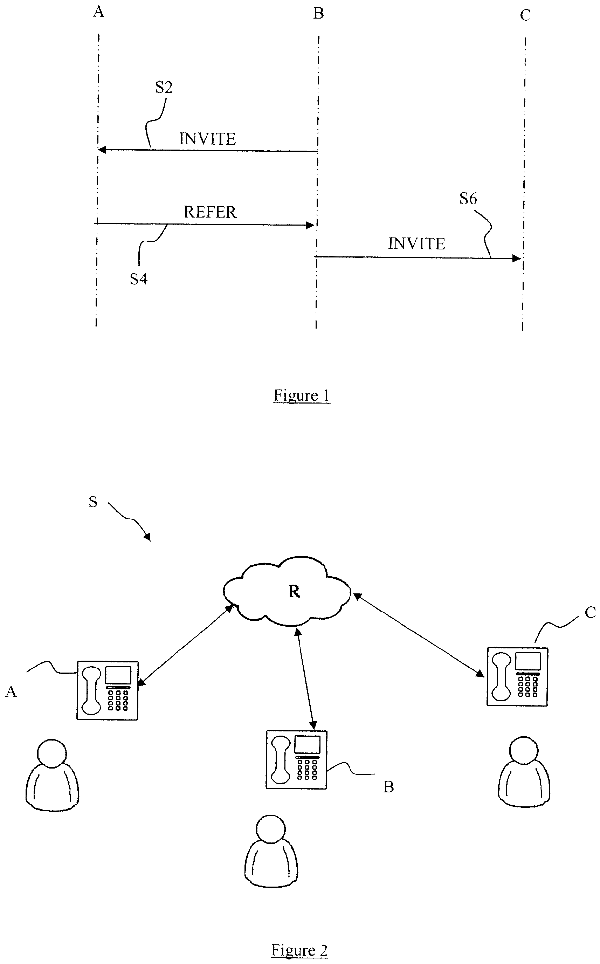

La **figure 1** illustre les différentes étapes mises en oeuvre par la méthode REFER de l'état de l'art.

Lors d'une étape S2, le terminal d'un interlocuteur appelant B envoie un message SIP "INVITE" à destination d'un terminal d'un premier interlocuteur appelé A. Une session SIP est ensuite établie entre l'interlocuteur appelant B et le premier interlocuteur appelé A. Suite à l'établissement de la session SIP, une communication vocale est engagée entre l'interlocuteur appelant B et le premier interlocuteur appelé A.

Suite, par exemple à la demande de l'interlocuteur appelant B qui souhaite être transféré vers un troisième interlocuteur C, le premier interlocuteur appelé A envoie un message SIP REFER à destination de l'interlocuteur appelant B (étape S4). Ce message REFER contient un identifiant du premier interlocuteur appelé A, par exemple une adresse URI (pour "Uniform Resource Identifier"), un identifiant du troisième interlocuteur C, par exemple une adresse URI, et un paramètre "Replaces". Le paramètre "Replaces" indique au terminal de l'interlocuteur appelant B qu'il doit remplacer la communication établie entre l'interlocuteur appelant B et le premier interlocuteur appelé A par une communication entre l'interlocuteur appelant B et le troisième interlocuteur C.

A réception du message REFER, l'interlocuteur appelant B envoie un message d'acquittement à l'interlocuteur appelé A pour lui indiquer qu'il accepte la demande de transfert. Puis, la communication entre l'interlocuteur appelant B et le premier interlocuteur appelé A est coupée. L'interlocuteur appelant B envoie alors un message "INVITE" à destination du troisième interlocuteur C (étape S6). Une session SIP est établie entre l'interlocuteur appelant B et le troisième interlocuteur C. Puis une communication vocale est engagée entre l'interlocuteur appelant B et le troisième interlocuteur C.

Dans le cas où la communication ne peut être établie entre l'interlocuteur appelant B et le troisième interlocuteur C, par exemple si le troisième interlocuteur C n'est pas joignable, la session SIP entre l'interlocuteur appelant B et le troisième interlocuteur C se termine.

Actuellement, les mises en oeuvre définies dans les standards ne permettent pas la reprise de la communication établie entre l'interlocuteur appelant B et le premier interlocuteur appelé A en cas d'échec du transfert ou avant l'établissement du transfert. En d'autres termes, la session initialement établie entre l'interlocuteur appelé A et l'interlocuteur appelant B ne peut pas être réactivée.

Ainsi en cas d'échec, l'utilisateur appelant B doit effectuer un nouvel appel vers le terminal du premier interlocuteur appelé A pour, par exemple, demander le transfert vers un autre interlocuteur.

Cette situation est difficilement acceptable par un interlocuteur, et ce d'autant plus que cette fonction de reprise de communication est mise en oeuvre dans le réseau classique RTC.

Outre une perte de temps, l'interlocuteur a ainsi l'impression d'une régression.

Il existe donc un besoin d'une solution permettant une reprise d'une communication transférée non établie.

Les documents EP2093968 et EP2202934 décrivent le préambule de la revendication 1. EP2093968 ne divulgue pas une étape de réception d'au moins une information relative à l'établissement de la communication entre un premier et un troisième terminal, mise en oeuvre après la coupure de la liaison établie. EP2202934 ne divulgue pas une étape de vérification pour déterminer si au moins un critère prédéfini de non établissement est vérifié dans le cas où une information indiquant que l'établissement de ladite communication entre le premier et le troisième terminal n'est pas effectué.

L'invention vient améliorer la situation.

A cet effet, l'invention se rapporte à un procédé de supervision d'un transfert de communication établie entre un premier et un deuxième terminal de communication dans un réseau de communication supportant un protocole de signalisation de type SIP, caractérisé en ce que, suite à l'envoi d'une commande de transfert de la communication établie vers une communication entre le premier et un troisième terminal de communication, le procédé comporte les étapes suivantes :
- obtention d'au moins une information relative à l'établissement de la communication entre le premier et le troisième terminal;
- vérification d'au moins un critère de non établissement en fonction de ladite au moins une information;
- envoi d'une commande de reprise de la communication entre le premier et le deuxième terminal, en fonction du résultat de la vérification.

L'obtention de notifications relatives au déroulement de l'établissement de la communication transférée par le terminal transférant, c'est-à-dire du terminal demandant le transfert, permet le rétablissement de la communication initiale en cas d'échec de la tentative de transfert, par exemple lorsque l'interlocuteur est absent ou qu'il est déjà en communication. Cela permet également le rétablissement de la communication à la demande de l'utilisateur transférant, par exemple s'il change d'avis.

Le procédé de supervision permet ainsi de rétablir la communication initiale de façon simple sans nécessiter une nouvelle communication, et en conséquence sans nécessiter de nouveau la saisie de l'adresse du terminal appelé.

Selon un mode de réalisation particulier du procédé de supervision, la commande de reprise de la communication est une requête SIP comportant un paramètre de reprise prédéfini.

Ainsi, il n'est pas nécessaire de créer une nouvelle commande SIP pour mettre en place le procédé de l'invention.

Selon une caractéristique particulière du procédé de supervision, la requête SIP est un message de type INVITE et le paramètre de reprise prédéfini est un paramètre de type REPLACES.

Le paramètre de type REPLACES est inséré en complément des paramètres existants de la commande SIP de type INVITE. L'introduction du paramètre REPLACES dans une commande INVITE permet d'avertir le terminal à l'initiative de la communication que le terminal appelé souhaite reprendre la communication initialement établie.

Selon une caractéristique particulière du procédé de supervision, un critère de non établissement est vérifié en outre en fonction d'une requête utilisateur.

Ainsi, l'utilisateur transférant, ayant demandé le transfert, peut demander à reprendre la communication avec l'interlocuteur à l'origine de l'appel. Ceci est particulièrement avantageux si l'utilisateur transférant s'aperçoit par exemple qu'il s'est trompé d'interlocuteur ou s'il change d'avis avant l'établissement de la communication vocale transférée, c'est-à-dire avant l'échange de données.

Selon un deuxième caractéristique utilisée seule ou en complément de la caractéristique précédente, un critère de non établissement est vérifié en outre en fonction d'un délai d'attente prédéterminé.

Ceci permet de reprendre la communication initiale lorsque l'interlocuteur ne répond pas.

L'invention se rapporte également à un procédé de traitement d'une communication établie entre un premier et un deuxième terminal de communication dans un réseau de communication supportant un protocole de signalisation de type SIP, caractérisé en ce que, suite à la réception d'une commande de transfert de la communication établie vers une communication entre le premier terminal et un troisième terminal, le procédé comporte les étapes suivantes :
- transmission d'au moins une information relative à l'établissement d'une communication entre le premier et le troisième terminal;
- réception d'une commande de reprise de la communication entre le premier et le deuxième terminal, ladite commande étant déterminée en fonction du résultat d'une vérification d'au moins un critère de non établissement en fonction de ladite au moins une information transmise;
- établissement d'une communication entre le premier et le deuxième terminal en fonction de la commande de reprise reçue.

Sur réception d'une requête du terminal transférant initialement appelé, le terminal transféré, à l'origine de l'appel, suspend la tentative d'établissement d'appel vers le terminal destinataire du transfert et reprend la communication avec le terminal transférant. Ainsi, il n'est pas nécessaire pour l'utilisateur à l'origine de l'appel de raccrocher et de recommencer un appel vers le terminal appelé en cas d'échec du transfert.

Selon une caractéristique particulière du procédé de traitement, l'établissement de la communication entre le premier et le troisième utilisateur est effectué lors d'une session de communication et l'étape d'établissement comporte une étape de modification d'au moins un paramètre de ladite session en cours d'établissement.

La modification de paramètres de la session en cours permet un traitement simplifié en limitant le nombre de messages de signalisation échangés et en facilitant les étapes de routage.

Selon un mode de réalisation particulier du procédé de traitement, la session comporte un identifiant de troisième terminal et l'étape de modification comprend le remplacement de l'identifiant de troisième terminal par un identifiant de deuxième terminal.

Le remplacement du destinataire dans les messages SIP échangés est un moyen simple de réorientation des messages de signalisation.

L'invention se rapporte également à un dispositif de supervision d'un transfert de communication établie entre un premier et un deuxième terminal de communication dans un réseau de communication supportant un protocole de signalisation de type SIP, comportant des moyens de transmission d'une commande de transfert de la communication établie vers une communication entre le premier terminal et un troisième terminal, caractérisé en ce qu'il comporte :
- des moyens d'obtention d'une information relative à l'établissement de la communication entre le premier et le troisième terminal;
- des moyens de vérification d'au moins un critère de non établissement en fonction de ladite au moins une information;
- des moyens d'envoi d'une commande de reprise de la communication entre le premier et le deuxième terminal, en fonction du résultat de la vérification.

L'invention se rapporte aussi à un dispositif de traitement d'une communication établie entre un premier et un deuxième terminal dans un réseau de communication supportant un protocole de signalisation de type SIP, comprenant des moyens de réception d'une commande de transfert de la communication établie vers une communication entre le premier terminal et un troisième terminal, caractérisé en ce qu'il comporte :
- des moyens de transmission d'au moins une information relative à l'établissement de la communication entre le premier et le troisième terminal;
- des moyens de réception d'une commande de reprise de la communication entre le premier et le deuxième terminal, ladite commande étant déterminée en fonction du résultat d'une vérification d'au moins un critère de non établissement en fonction de ladite au moins une information transmise;
- des moyens d'établissement d'une communication entre le premier et le deuxième terminal en fonction de la commande de reprise reçue.

L'invention se rapporte encore à un terminal de communication caractérisé en ce qu'il comporte un dispositif de supervision et/ou un dispositif de traitement tels que décrits précédemment.

L'invention se rapporte également à un signal porteur d'une requête SIP transmise suite à l'envoi d'une commande de transfert d'une communication établie entre un premier et un deuxième terminal de communication vers une communication entre le premier terminal et un troisième terminal dans un réseau de communication supportant un protocole de signalisation de type SIP, caractérisé en ce que la requête est une commande de reprise de la communication entre le premier et le deuxième terminal, ladite commande étant de type INVITE et comportant un paramètre de reprise prédéfini.

L'invention se rapporte encore à un produit programme d'ordinateur comprenant des instructions pour mettre en oeuvre les étapes d'un procédé de supervision tel que décrit précédemment, lorsqu'il est chargé et exécuté par un processeur.

L'invention concerne enfin un produit programme d'ordinateur comprenant des instructions pour mettre en oeuvre les étapes d'un procédé de traitement tel que décrit précédemment, lorsqu'il est chargé et exécuté par un processeur.

D'autres particularités et avantages de la présente invention apparaitront dans la description suivante d'un mode de réalisation donné à titre d'exemple non limitatif, en référence aux dessins annexés, dans lesquels :
- la figure 1 est un schéma illustrant les différentes étapes d'un procédé de transfert de l'état de l'art;
- la figure 2 est un schéma général présentant le contexte de l'invention;
- la figure 3 est un schéma illustrant les principales étapes d'un procédé de supervision, respectivement d'un procédé de traitement d'un transfert de communication, selon un mode de réalisation particulier de l'invention;
- la figure 4 est un schéma bloc représentant un dispositif de supervision selon un mode de réalisation de l'invention;
- la figure 5 est un schéma bloc représentant un dispositif de traitement selon un mode de réalisation de l'invention.

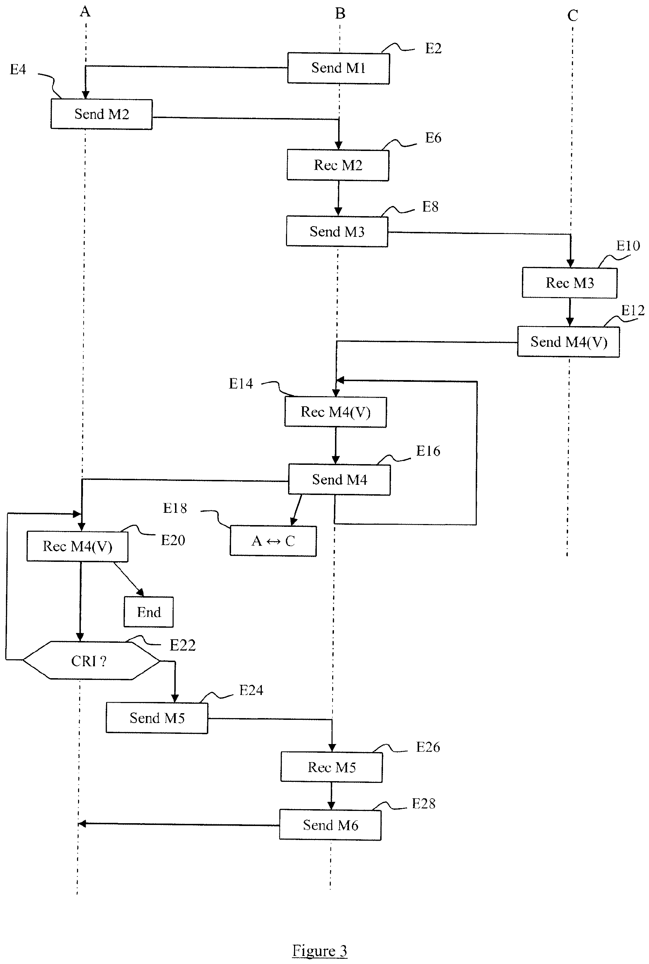

Un mode de réalisation de l'invention va maintenant être décrit en référence aux figures 2 et 3.

En référence à la **figure 2**, un système S comporte une pluralité de terminaux d'utilisateurs A, B, C...aptes à communiquer entre eux via un réseau de télécommunication R.

Les terminaux A, B, C... sont des terminaux de communication, fixes ou mobiles, aptes à établir des communications téléphoniques.

Le réseau R est un réseau de type VoIP basé par exemple sur une architecture IMS (pour "IP Multimedia Subsystem").

L'architecture IMS, standardisée auprès de l'organisme 3GPP ("3^{rd} Generation Partnership Project" en anglais), utilise un protocole de signalisation de type SIP et un protocole de transfert de données de type RTP. Dans cette architecture, les messages de signalisation SIP émis par un premier terminal à destination d'un deuxième terminal transitent par un ou plusieurs serveurs d'applications ("application server" en anglais) (non représentés). De façon connue, le rôle des serveurs d'application est notamment de gérer les profils des utilisateurs et d'affecter les adresses IP dans les messages échangés.

Un message de signalisation émis par un premier terminal et reçu par un deuxième terminal transite de façon classique par un ou plusieurs serveurs d'application du système. Un message émis peut être complété ou modifié par un ou plusieurs serveurs d'application au cours du routage. Ces modifications étant des modifications de forme, et non pas de fond, la signification du message est identique.

Aussi, pour des raisons de clarté de la description, les détails de routage des différents messages émis ne sont pas détaillés. Il est considéré qu'un message de signalisation émis par un premier terminal est reçu par un deuxième terminal.

A titre d'alternative, le réseau R est un réseau IP basé sur un protocole de signalisation SIP.

A titre d'alternative, le réseau R ne comporte pas de serveurs d'applications et les messages de signalisation SIP émis par un premier terminal sont reçus directement par un deuxième terminal.

En référence à la **figure 3**, les différentes étapes d'un procédé de supervision et d'un procédé de traitement vont maintenant être décrites.

Les étapes E20, E22 et E24 représentent les étapes du procédé de supervision mises en oeuvre par exemple par le terminal A.

Les étapes E16, E26 et E28 représentent les étapes du procédé de traitement mises en oeuvre par exemple par le terminal B

Lors d'une étape E2, une communication vocale entre un interlocuteur appelant B et un premier interlocuteur appelé A est établie à l'initiative de l'interlocuteur appelant B.

L'établissement de cette communication est effectué de façon classique. Plus précisément, un terminal de l'interlocuteur appelant B envoie un message M1 de demande de communication. Le message M1 est un message de signalisation SIP "INVITE" à destination d'un terminal du premier interlocuteur appelé A. Une session SIP est établie entre le terminal de l'interlocuteur appelant B et le terminal du premier interlocuteur appelé A. Suite à l'établissement de la session SIP, une communication de données, par exemple une communication vocale, est engagée entre l'interlocuteur appelant B et le premier interlocuteur appelé A.

Le terminal B de l'interlocuteur appelant représente ici un premier terminal.

Le terminal A du premier interlocuteur appelé représente un deuxième terminal.

Lors d'une étape E4, effectuée, par exemple, suite à la demande de l'interlocuteur appelant B qui souhaite être transféré vers un troisième interlocuteur C, le terminal du premier interlocuteur appelé A envoie un message M2 de demande de transfert à destination de l'interlocuteur appelant B. Le message M2 est un message de signalisation SIP REFER et contient un identifiant du premier interlocuteur appelé A, par exemple une adresse URI (pour "Uniform Resource Identifier" en anglais), un identifiant du troisième interlocuteur C, par exemple une adresse URI, et un paramètre "Replaces".

Le troisième interlocuteur C est considéré ici comme le deuxième interlocuteur appelé. Le terminal C du troisième interlocuteur représente ici un troisième terminal.

Le premier terminal B est le terminal transféré, le deuxième terminal A est le terminal transférant et le troisième terminal C est le terminal destinataire du transfert.

Le message de demande de transfert M2 est reçu par le premier terminal B lors d'une étape E6.

Lors d'une étape E8, le premier terminal, de l'interlocuteur appelant, B envoie alors un message M3 de transfert à destination du troisième interlocuteur C dans le but d'établir une session de communication. Le message de transfert M3 est un message de signalisation SIP "INVITE". De façon connue, le message INVITE permet de demander l'ouverture d'une session de communication entre le premier terminal B et le troisième terminal C.

La session de communication comporte un identifiant de terminal demandeur, ici un identifiant du premier terminal B, et un identifiant du terminal destinataire, ici le troisième terminal C. L'identifiant du terminal demandeur et l'identifiant du terminal destinataire sont des paramètres de la session.

Le message M3 est reçu par le troisième terminal C lors d'une étape E10.

Lors d'une étape E12, le troisième terminal C coupe la communication vocale en cours entre l'interlocuteur appelant B et le premier interlocuteur appelé A et envoie un message de notification M4 à destination du premier terminal B. Le message M4 est un message de signalisation SIP NOTIFY. Il contient un indicateur d'état V. L'indicateur d'état V est une information relative à l'établissement de la communication entre le premier et le troisième terminal. L'indicateur d'état V est représentatif de l'état d'avancement de l'établissement de la communication en cours entre le premier et le troisième terminal et indique par exemple que l'établissement a commencé, que le terminal sonne, que la ligne est occupée ou encore que l'établissement est effectué. Les valeurs prises par l'indicateur d'état V sont standardisés.

Le message de notification M4 est reçu par le premier terminal B lors d'une étape E14.

Lors d'une étape E16, le premier terminal B retransmet le message de notification M4 reçu au deuxième terminal A.

Si l'indicateur d'état V contenu dans le message de notification M4 indique que l'établissement de la communication est effectué, une communication vocale s'engage alors entre l'interlocuteur appelant B et le troisième interlocuteur C (étape E18).

Le message de notification M4 est reçu par le deuxième terminal A lors d'une étape E20.

Si l'indicateur d'état V contenu dans le message de notification M4 reçu indique que l'établissement de la communication est effectué, le processus s'arrête.

Si l'indicateur d'état contenu dans le message de notification M4 reçu indique que l'établissement de la communication n'est pas encore effectué, le deuxième terminal A, lors d'une étape E22, vérifie si au moins un critère de non établissement CRI est vérifié. Des exemples de critères de non établissement CRI sont détaillés dans la suite de la description.

Si, au cours de l'étape E22 de vérification, aucun critère de non établissement CRI n'est vérifié, les étapes E12 à E22 sont réitérées.

Sinon, c'est-à-dire si au moins un critère de non établissement CRI est vérifié, le deuxième terminal A envoie, lors d'une étape E24 un message de reprise M5 à destination du premier terminal B.

Le message de reprise M5 est un message de signalisation SIP INVITE comportant un identifiant du premier terminal B, un identifiant du deuxième terminal A et un paramètre de reprise P prédéfini. Le paramètre de reprise P est par exemple un paramètre REPLACES. L'insertion du paramètre de reprise P dans une commande SIP INVITE permet d'utiliser une commande existante pour assurer la fonction de reprise de transfert. Le paramètre REPLACES est un paramètre standardisé. L'utilisation du paramètre REPLACES dans une commande INVITE indique que le transfert de communication doit être interrompu et que la communication initiale entre le premier et le deuxième terminal doit être rétablie.

Le message de reprise M5 est reçu par le premier terminal B lors d'une étape E26.

Lors d'une étape E28, le premier terminal B procède à l'établissement d'une communication avec le deuxième terminal A. A cet effet, il modifie les paramètres de la session en cours d'établissement avec le troisième terminal C. Plus précisément, il remplace l'identifiant du destinataire, qui est un identifiant du troisième terminal C, par un identifiant du deuxième terminal A dans les messages de signalisation SIP. Ainsi, il envoie un message M6 de demande d'ouverture d'une communication à destination du deuxième terminal A. Le message M6 de demande d'ouverture d'une communication est un message de signalisation SIP INVITE.

Suite au changement de l'identifiant de destinataire dans les paramètres de la session en cours d'établissement, le message M6 est transmis à destination du premier terminal A.

Si le message de reprise M5 est reçu par le premier terminal B alors que la communication vocale a été engagée, le premier terminal B ne tient pas compte de ce message.

Des exemples de critères CRI vérifiés lors de l'étape de vérification E22 vont maintenant être décrits.

Un premier critère CRI1 est par exemple : "la valeur de l'indicateur d'état reçu est 486". La valeur "486" indique que la ligne de l'interlocuteur est occupée.

Un deuxième critère CRI2 est par exemple : "la valeur de l'indicateur d'état reçu est différent de 200 (communication non encore établie) et le délai écoulé depuis l'envoi du message de demande de transfert M2 est supérieur à un délai prédéterminé D, par exemple, 10 secondes". Ce critère correspond au cas où le troisième interlocuteur C ne répond pas.

Un troisième critère CRI3 est par exemple : "la valeur de l'indicateur d'état reçu est différente de 200 (communication non encore établie) et l'interlocuteur a demandé la reprise de la communication". La demande de reprise par l'interlocuteur est effectuée par exemple au moyen d'une touche prédéterminée d'un clavier du terminal. La demande de reprise est par exemple effectuée suite à une erreur de saisie de l'identifiant de l'interlocuteur.

A titre d'alternative, le nombre de critères utilisés est différent.

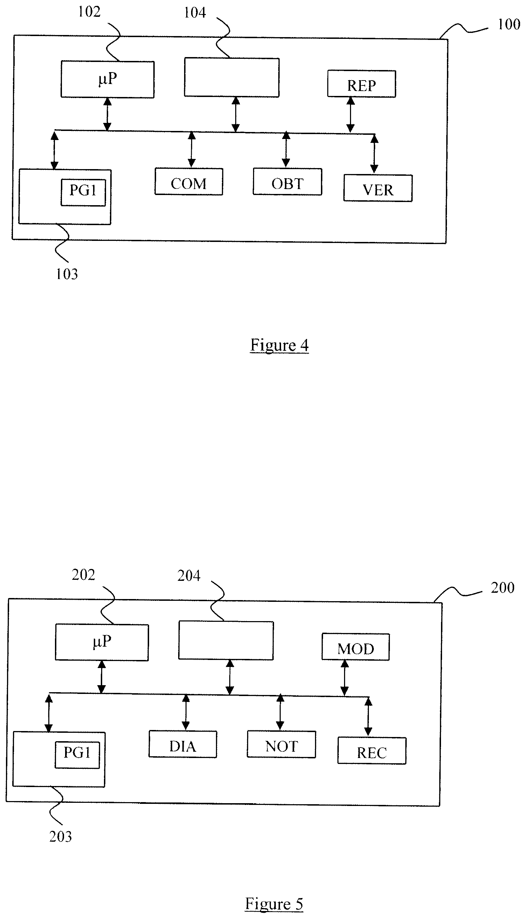

Selon un mode de réalisation choisi et représenté à la **figure 4****,** un dispositif de supervision mettant en oeuvre un procédé de supervision d'un transfert de communication, selon l'invention est par exemple un terminal de communication 100 qui comporte de façon connue, notamment une unité de traitement 102 équipée d'un microprocesseur, une mémoire morte de type ROM ou EEPROM 103, une mémoire vive de type RAM 104.

Le terminal de communication 100 peut comporter de manière classique et non exhaustive les éléments suivants: un clavier, un écran, un microphone, un haut-parleur ...

Le terminal de communication 100 comprend également un module de communication COM apte à établir et/ou à recevoir une communication avec un terminal de communication via un réseau de communication R, un module d'obtention OBT, un module de vérification VER et un module d'envoi d'une commande de reprise REP.

Le module de communication COM est ainsi apte à communiquer avec un premier terminal de communication, lors d'une communication établie à l'initiative de ce premier terminal.

Le module d'obtention OBT est apte à recevoir au moins une information relative à l'établissement d'une communication entre le premier terminal et un troisième terminal.

Le module de vérification VER est apte à vérifier au moins un critère de non établissement en fonction de ladite au moins une information reçue.

Le module de commande de reprise REP est apte à commander la reprise de la communication établie à l'initiative de ce premier terminal, en fonction du résultat de la vérification.

La mémoire morte 103 comporte des registres mémorisant un programme d'ordinateur PG1 comportant des instructions de programme adaptées à réaliser les étapes d'un procédé de supervision d'un transfert d'une communication selon l'invention.

Lors de la mise sous tension, le programme PG1 stocké dans la mémoire morte 103 est transféré dans la mémoire vive qui contiendra alors un code exécutable ainsi que des registres pour mémoriser les variables nécessaires à la mise en oeuvre d'une étape d'obtention d'au moins une information relative à l'établissement de la communication entre le premier et le troisième terminal, d'une étape de vérification d'au moins un critère de non établissement en fonction de ladite au moins une information et d'une étape d'envoi d'une commande de reprise de la communication entre le premier et le deuxième terminal, en fonction du résultat de la vérification.

De manière plus générale un moyen de stockage, lisible par un ordinateur ou par un microprocesseur, intégré ou non au dispositif, éventuellement amovible, mémorise un programme mettant en oeuvre les étapes d'un procédé de supervision d'un transfert de communication, selon l'invention.

Selon un mode de réalisation choisi et représenté à la **figure 5****,** un dispositif de traitement mettant en oeuvre un procédé de traitement d'une communication établie entre un premier et un deuxième terminal, selon l'invention est par exemple un terminal de communication 200 qui comporte de façon connue, notamment une unité de traitement 202 équipée d'un microprocesseur, une mémoire morte de type ROM ou EEPROM 203, une mémoire vive de type RAM 204.

Le terminal de communication 200 peut comporter de manière classique et non exhaustive les éléments suivants: un clavier, un écran, un microphone, un haut-parleur ...

Le terminal de communication 200 comprend également un module de communication DIA apte à établir et/ou à recevoir une communication avec un terminal de communication via un réseau de communication R, un module de transmission de notification NOT, un module de réception d'une commande de reprise REC et un module de modification MOD.

Le module de communication DIA est ainsi apte à établir une communication avec un deuxième terminal, à recevoir une commande de transfert de la communication établie vers une communication avec un troisième terminal, à initialiser l'établissement d'une communication avec le troisième terminal suite à la réception de la demande de transfert et à recevoir au moins une information relative à l'établissement de la communication avec le troisième terminal.

Le module de transmission de notification NOT est apte à transmettre au moins une information relative à l'établissement de la communication en cours d'établissement avec le troisième terminal.

Le mode de réception d'une commande de reprise REC est apte à recevoir une commande de reprise de la communication établie avec le deuxième terminal, ladite commande étant déterminée en fonction du résultat d'une vérification d'au moins un critère de non établissement en fonction de ladite information transmission.

Le module de modification MOD est apte à établir une communication avec le deuxième terminal en fonction de la commande de reprise reçue.

La mémoire morte 203 comporte des registres mémorisant un programme d'ordinateur PG2 comportant des instructions de programme adaptées à réaliser les étapes d'un procédé de traitement d'une communication établie entre un premier et un deuxième terminal dans un réseau de communication supportant un protocole de signalisation de type SIP d'une requête principale d'obtention d'un flux de données.

Lors de la mise sous tension, le programme PG2 stocké dans la mémoire morte 503 est transféré dans la mémoire vive qui contiendra alors un code exécutable ainsi que des registres pour mémoriser les variables nécessaires à la mise en oeuvre des étapes de transmission d'au moins une information relative à l'établissement de la communication entre le premier et le troisième terminal, de réception d'une commande de reprise de la communication entre le premier et le deuxième terminal, ladite commande étant déterminée en fonction du résultat d'une vérification d'au moins un critère de non établissement en fonction de ladite information transmission et d'établissement d'une communication entre le premier et le deuxième terminal en fonction de la commande de reprise reçue.

De manière plus générale un moyen de stockage, lisible par un ordinateur ou par un microprocesseur, intégré ou non au dispositif, éventuellement amovible, mémorise un programme mettant en oeuvre les étapes d'un procédé de traitement de traitement d'une communication établie entre un premier et un deuxième terminal dans un réseau de communication supportant un protocole de signalisation de type SIP, selon l'invention.

## Revendications

1. Procédé de supervision d'un transfert d'une communication dans un réseau de communication (R) supportant un protocole de signalisation de type SIP, **caractérisé en ce que** le procédé comporte les étapes suivantes mises en oeuvre par un deuxième terminal (A) suite à l'envoi (E4) par le deuxième terminal (A) d'une commande de transfert (M2) d'une communication établie entre un premier terminal (B) et le deuxième terminal (A) vers une communication entre le premier terminal (B) et un troisième terminal de communication (C), et suite à la coupure de la communication établie entre le premier et le deuxième terminal, ladite coupure étant provoquée par ladite commande de transfert, :
- réception (E20) en provenance du premier terminal (B) d'au moins une information (M4) relative à l'établissement de la communication entre le premier (B) et le troisième terminal (C);
- si ladite information indique que l'établissement de ladite communication entre le premier (B) et le troisième terminal n'est pas effectué, vérification (E22) pour déterminer si au moins un critère prédéfini de non établissement (CRI) est vérifié;
- envoi (E24) audit premier terminal d'une commande de reprise (M5) de la communication entre le premier (B) et le deuxième terminal (A), si au moins un dit critère est vérifié.

2. Procédé de supervision selon la revendication 1 dans lequel la commande de reprise de la communication est une requête SIP comportant un paramètre de reprise prédéfini.

3. Procédé de supervision selon la revendication 2 dans lequel la requête SIP est un message de type INVITE et le paramètre de reprise prédéterminé est un paramètre de type REPLACES.

4. Procédé de supervision selon la revendication 1 dans lequel un critère de non établissement est vérifié en outre en fonction d'une requête utilisateur.

5. Procédé de supervision selon la revendication 1 dans lequel un critère de non établissement est vérifié en outre en fonction d'un délai d'attente prédéterminé.

6. Procédé de traitement, dans un réseau de communication (R) supportant un protocole de signalisation de type SIP, **caractérisé en ce que** le procédé comporte les étapes suivantes, mises en oeuvre par un premier terminal (B) suite à la réception (E6) par le premier terminal d'une commande de transfert (M2) d'une communication établie entre le premier terminal (B) et un deuxième terminal de communication (A) vers une communication entre le premier terminal (B) et un troisième terminal (C), ladite commande de transfert (M2) ayant provoqué la coupure de la communication établie entre le premier (B) et le deuxième terminal de communication (A), :
- transmission (E16) au deuxième terminal (A) d'au moins une information (M4) relative à l'établissement d'une communication entre le premier (B) et le troisième terminal (C);
- réception (E26), en provenance du deuxième terminal, d'une commande de reprise (M5) de la communication entre le premier (B) et le deuxième terminal (C), ladite commande étant déterminée par le deuxième terminal si l'information indique que l'établissement de la communication entre le premier (B) et le troisième terminal n'est pas effectué et si au moins un critère prédéfini de non établissement (CRI) est vérifié;
- établissement (E28) d'une communication entre le premier (B) et le deuxième terminal (A) en fonction de la commande de reprise reçue.

7. Procédé de traitement selon la revendication 6 **caractérisé en ce que** l'établissement de la communication entre le premier et le troisième terminal est effectué lors d'une session de communication et **en ce que** l'étape d'établissement de la communication entre le premier et le deuxième terminal comporte une étape de modification d'au moins un paramètre de ladite session.

8. Procédé de traitement selon la revendication 7 dans lequel la session comporte une identifiant de troisième terminal et l'étape de modification comprend le remplacement de l'identifiant de troisième terminal par un identifiant de deuxième terminal.

9. Dispositif de supervision, dit deuxième terminal, apte à communiquer dans un réseau de communication supportant un protocole de signalisation de type SIP, et comportant des moyens de transmission d'une commande de transfert d'une communication établie entre un premier terminal de communication et ledit dispositif de supervision vers une communication entre le premier terminal et un troisième terminal, l'envoi de ladite commande de transfert (M2) provoquant la coupure de la communication établie entre le premier terminal et le dispositif de supervision, ledit dispositif étant **caractérisé en ce qu'**il comporte :
- des moyens d'obtention (OBT) configurés pour recevoir, en provenance d'un premier terminal, une information relative à l'établissement de la communication entre le premier et le troisième terminal;
- des moyens de vérification (VER) configurés pour déterminer si ladite information indique si l'établissement de la communication entre le premier et le troisième terminal est effectué et si au moins un critère prédéfini de non établissement est vérifié;
- des moyens d'envoi (REP) au premier terminal d'une commande de reprise de la communication entre le premier terminal et le dispositif de supervision, si ladite information indique que l'établissement de la communication entre le premier et le troisième terminal est effectué et si au moins un dit critère est vérifié

10. Dispositif de traitement, dit premier terminal, apte à communiquer dans un réseau de communication supportant un protocole de signalisation de type SIP, comprenant des moyens de réception d'une commande de transfert d'une communication établie entre le dispositif de traitement et un deuxième terminal de communication vers une communication entre le dispositif de traitement et un troisième terminal, ladite commande de transfert (M2) provoquant la coupure de la communication entre le premier (B) et le deuxième terminal de communication (A) **caractérisé en ce qu'**il comporte :
- des moyens de transmission à destination du deuxième terminal d'au moins une information relative à l'établissement de la communication entre le premier et le troisième terminal;
- des moyens de réception d'une commande de reprise de la communication entre le dispositif de traitement et le deuxième terminal, ladite commande étant déterminée par le deuxième terminal suite à la réception par ce deuxième terminal d'une information indiquant que l'établissement de la communication entre le premier (B) et le troisième terminal n'est pas effectué, si au moins un critère prédéfini de non établissement (CRI) est vérifié ;
- des moyens d'établissement d'une communication entre le premier et le deuxième terminal en fonction de la commande de reprise reçue.

11. Terminal de communication **caractérisé en ce qu'**il comporte un dispositif de supervision selon la revendication 9 et/ou un dispositif de traitement selon la revendication 10.

12. Signal porteur d'une requête SIP transmise suite à l'envoi d'une commande de transfert d'une communication établie entre un premier et un deuxième terminal de communication vers une communication entre le premier terminal et un troisième terminal dans un réseau de communication supportant un protocole de signalisation de type SIP, ladite commande de transfert (M2) provoquant la coupure de la communication entre le premier (B) et le deuxième terminal de communication (A), **caractérisé en ce que** la requête est une commande de reprise de la communication entre le premier et le deuxième terminal selon la revendication 1 ou la revendication 6, ladite commande étant de type INVITE et comportant un paramètre de reprise prédéfini.

13. Produit programme d'ordinateur comprenant des instructions pour mettre en oeuvre les étapes du procédé de supervision selon la revendication 1, lorsqu'il est chargé et exécuté par un processeur.

14. Produit programme d'ordinateur comprenant des instructions pour mettre en oeuvre les étapes du procédé de traitement selon la revendication 6, lorsqu'il est chargé et exécuté par un processeur.

## Patentansprüche

1. Verfahren zur Überwachung einer Übertragung einer Kommunikation in einem Kommunikationsnetzwerk (R), das ein Signalgebungsprotokoll des Typs SIP unterstützt, **dadurch gekennzeichnet, dass** das Verfahren die folgenden Schritte umfasst, die über ein zweites Terminal (A) nach dem Versand (E4) eines Übertragungsbefehls (M2) einer zwischen dem ersten Terminal (B) und dem zweiten Terminal (A) hergestellten Kommunikation über das zweite Terminal (A) zu einer Kommunikation zwischen dem ersten Terminal (B) und einem dritten Kommunikationsterminal (C) umgesetzt werden, und wobei nach Trennung der zwischen dem ersten und dem zweiten Terminal hergestellten Kommunikation die Trennung durch den Übertragungsbefehl hervorgerufen wird :
- Empfang (E20) aus dem ersten Terminal (B) mindestens einer Information (M4) zur Herstellung der Kommunikation zwischen dem ersten (B) und dem dritten Terminal (C);
- wenn die Information darauf hinweist, dass die Herstellung der Kommunikation zwischen dem ersten (B) und dem dritten Terminal nicht erfolgt ist, Überprüfung (E22), um feststellen zu können, ob mindestens ein vordefiniertes Kriterium der nicht erfolgten Herstellung (CRI) erfüllt ist;
- Versand (E24) eines Befehls (M5) zur Wiederaufnahme der Kommunikation zwischen dem ersten (B) und dem zweiten Terminal (A) an das erste Terminal, wenn mindestens ein genanntes Kriterium erfüllt ist.

2. Überwachungsverfahren nach Anspruch 1, bei dem es sich bei dem Befehl zur Wiederaufnahme der Kommunikation um eine SIP-Anforderung mit mindestens einem vordefinierten Wiederaufnahmeparameter handelt.

3. Überwachungsverfahren nach Anspruch 2, bei dem es sich bei der SIP-Anforderung um eine Nachricht des Typs INVITE und bei dem vorbestimmten Wiederaufnahmeparameter um einen Parameter des Typs REPLACES handelt.

4. Überwachungsverfahren nach Anspruch 1, bei dem ein Kriterium der nicht erfolgten Herstellung zudem in Abhängigkeit einer Benutzeranforderung erfüllt wird.

5. Überwachungsverfahren nach Anspruch 1, bei dem ein Kriterium der nicht erfolgten Herstellung zudem in Abhängigkeit einer vorbestimmten Wartezeit erfüllt wird.

6. Verarbeitungsverfahren in einem Kommunikationsnetzwerk (R), das ein Signalgebungsprotokoll des Typs SIP unterstützt, **dadurch gekennzeichnet, dass** das Verfahren die folgenden Schritte umfasst, die von einem ersten Terminal (B) nach dem Empfang (E6) eines Übertragungsbefehls (M2) einer zwischen dem ersten Terminal (B) und einem zweiten Kommunikationsterminal (A) hergestellten Kommunikation von dem ersten Terminal an eine Kommunikation zwischen dem ersten Terminal (B) und einem dritten Terminal (C) umgesetzt werden, wobei der Übertragungsbefehl (M2) die Trennung der zwischen dem ersten (B) und dem zweiten hergestellten Kommunikationsterminal (A) Kommunikation hervorgerufen hat:
- Übertragung (E16) an das zweite Terminal (A) von mindestens einer Information (M4) zur Herstellung einer Kommunikation zwischen dem ersten (B) und dem dritten Terminal (C);
- Empfang (E26) aus dem zweiten Terminal eines Befehls (M5) zur Wiederaufnahme der Kommunikation zwischen dem ersten (B) und dem zweiten Terminal (C), wobei der Befehl vom zweiten Terminal festgelegt wird, wenn die Information darauf hinweist, dass die Herstellung der Kommunikation zwischen dem ersten (B) und dem dritten Terminal nicht erfolgt ist und mindestens ein vordefiniertes Kriterium der nicht erfolgten Herstellung (CRI) erfüllt ist;
- Herstellung (E28) einer Kommunikation zwischen dem ersten (B) und dem zweiten Terminal (A) in Abhängigkeit des empfangenen Wiederaufnahmebefehls.

7. Verarbeitungsverfahren nach Anspruch 6, **dadurch gekennzeichnet, dass** die Herstellung der Kommunikation zwischen dem ersten und dem dritten Terminal während einer Kommunikationssession erfolgt, und **dadurch gekennzeichnet, dass** der Schritt der Herstellung der Kommunikation zwischen dem ersten und dem zweiten Terminal einen Schritt der Änderung mindestens eines Parameters der Session umfasst.

8. Verarbeitungsverfahren nach Anspruch 7, bei dem die Session einen Identifikator des dritten Terminals umfasst und der Schritt der Änderung den Austausch des Identifikators des dritten Terminals durch einen Identifikator des zweiten Terminals umfasst.

9. Überwachungsvorrichtung, die als zweites Terminal bezeichnet wird und dazu in der Lage ist, in einem Kommunikationsnetzwerk zu kommunizieren, das ein Signalgebungsprotokoll des Typs SIP unterstützt, und Mittel zur Übertragung eines Befehls zur Übertragung einer zwischen einem ersten Kommunikationsterminal und der Überwachungsvorrichtung hergestellten Kommunikation auf eine Kommunikation zwischen dem ersten und einem dritten Terminal umfasst, wobei der Versand des Übertragungsbefehls (M2) die Trennung der zwischen dem ersten Terminal und der Überwachungsvorrichtung hergestellten Kommunikation hervorruft, wobei die Vorrichtung **dadurch gekennzeichnet ist, dass** sie Folgendes umfasst:
- Mittel zum Erhalt (OBT), die zum Empfang einer Information zur Herstellung der Kommunikation zwischen dem ersten und dem dritten Terminal von einem ersten Terminal konfiguriert sind;
- Mittel zur Überprüfung (VER), die für die Feststellung konfiguriert sind, ob die Information angibt, dass die Herstellung der Kommunikation zwischen dem ersten und dem dritten Terminal erfolgt, und ob mindestens ein vordefiniertes Kriterium der nicht erfolgten Herstellung erfüllt ist;
- Mittel zum Versand (REP) eines Befehls zur Wiederaufnahme der Kommunikation zwischen dem ersten Terminal und der Überwachungsvorrichtung an das erste Terminal, wenn die Information angibt, dass die Herstellung der Kommunikation zwischen dem ersten und dem dritten Terminal erfolgt und wenn mindestens eines der Kriterien erfüllt ist.

10. Verarbeitungsvorrichtung, die als erstes Terminal bezeichnet wird und dazu in der Lage ist, in einem Kommunikationsnetzwerk zu kommunizieren, das ein Signalgebungsprotokoll des Typs SIP unterstützt, die Mittel zum Empfang eines Befehls zur Übertragung einer zwischen der Verarbeitungsvorrichtung und einem zweiten Kommunikationsterminal hergestellten Kommunikation aud eine Kommunikation zwischen der Verarbeitungsvorrichtung und einem dritten Terminal umfasst, wobei der Übertragungsbefehl (M2) die Trennung der Kommunikation zwischen dem ersten (B) und dem zweiten Kommunikationsterminal (A) umfasst, **dadurch gekennzeichnet, dass** sie Folgendes umfasst:
- Mittel zur Übertragung von mindestens einer Information zur Herstellung der Kommunikation zwischen dem ersten und dem dritten Terminal an das zweite Terminal;
- Mittel zum Empfang eines Befehls zur Wiederaufnahme der Kommunikation zwischen der Verarbeitungsvorrichtung und dem zweiten Terminal, wobei der Befehl durch das zweite Terminal im Anschluss an den Empfang einer Information von dem zweiten Terminal vorgegeben wird, die angibt, dass die Herstellung der Kommunikation zwischen dem ersten (B) und dem dritten Terminal nicht erfolgt, wenn mindestens ein vordefiniertes Kriterium der nicht erfolgten Herstellung (CRI) erfüllt ist;
- Mittel zur Herstellung einer Kommunikation zwischen dem ersten und dem zweiten Terminal in Abhängigkeit des erhaltenen Wiederaufnahmebefehls.

11. Kommunikationsterminal, **dadurch gekennzeichnet, dass** es eine Überwachungsvorrichtung nach Anspruch 9 und/oder eine Verarbeitungsvorrichtung nach Anspruch 10 umfasst.

12. Trägersignal einer SIP-Anforderung, das nach dem Versand eines Befehls zur Übertragung einer zwischen einem ersten und zweiten Kommunikationsterminal hergestellten Kommunikation auf eine Kommunikation zwischen dem ersten Terminal und einem dritten Terminal in einem Kommunikationsnetzwerk übertragen wird, das ein Signalgebungsprotokoll des Typs SIP unterstützt, wobei der Übertragungsbefehl (M2) die Trennung der Kommunikation zwischen dem ersten (B) und dem zweiten Kommunikationsterminal (A) hervorruft, **dadurch gekennzeichnet, dass** es sich bei der Anforderung um einen Befehl zur Wiederaufnahme der Kommunikation zwischen dem ersten und dem zweiten Terminal nach Anspruch 1 oder Anspruch 6 handelt, wobei es sich bei dem Befehl um einen Befehl des Typs INVITE handelt und er mindestens einen vordefinierten Wiederaufnahmeparameter umfasst.

13. Computerprogrammprodukt, das die Anweisungen zur Umsetzung der Verfahrensschritte nach Anspruch 1 bei Einlesen und Ausführen durch einen Prozessor umfasst.

14. Computerprogrammprodukt, das die Anweisungen zur Umsetzung der Verarbeitungsschritte nach Anspruch 6 bei Einlesen und Ausführen durch einen Prozessor umfasst.

## Claims

1. Method of supervision of a handover of a communication in a communication network (R) supporting a signalling protocol of SIP type, **characterized in that** the method comprises the following steps implemented by a second terminal (A) subsequent to the dispatching (E4) by the second terminal (A) of a command for handover (M2) of a communication established between a first terminal (B) and the second terminal (A) to a communication between the first terminal (B) and a third communication terminal (C), and subsequent to the cutting of the communication established between the first and the second terminal, said cutting being prompted by said handover command:
- reception (E20) from the first terminal (B) of at least one information item (M4) relating to the establishment of the communication between the first (B) and the third terminal (C);
- if said information item indicates that the establishment of said communication between the first (B) and the third terminal is not performed, verification (E22) to determine whether at least one predefined criterion of non-establishment (CRI) is satisfied;
- dispatching (E24) to said first terminal of a command for resumption (M5) of the communication between the first (B) and the second terminal (A), if at least one said criterion is satisfied.

2. Method of supervision according to Claim 1, in which the command for resumption of the communication is a SIP request comprising a predefined resumption parameter.

3. Method of supervision according to Claim 2, in which the SIP request is a message of INVITE type and the predetermined resumption parameter is a parameter of REPLACES type.

4. Method of supervision according to Claim 1, in which a non-establishment criterion is furthermore satisfied as a function of a user request.

5. Method of supervision according to Claim 1, in which a non-establishment criterion is furthermore satisfied as a function of a predetermined waiting period.

6. Method of processing, in a communication network (R) supporting a signalling protocol of SIP type, **characterized in that** the method comprises the following steps, implemented by a first terminal (B) subsequent to the reception (E6) by the first terminal of a command for handover (M2) of a communication established between the first terminal (B) and a second communication terminal (A) to a communication between the first terminal (B) and a third terminal (C), said handover command (M2) having prompted the cutting of the communication established between the first (B) and the second communication terminal (A):
- transmission (E16) to the second terminal (A) of at least one information item (M4) relating to the establishment of a communication between the first (B) and the third terminal (C);
- reception (E26), from the second terminal, of a command for resumption (M5) of the communication between the first (B) and the second terminal (C), said command being determined by the second terminal if the information item indicates that the establishment of the communication between the first (B) and the third terminal is not performed and if at least one predefined criterion of non-establishment (CRI) is satisfied;
- establishment (E28) of a communication between the first (B) and the second terminal (A) as a function of the resumption command received.

7. Method of processing according to Claim 6, **characterized in that** the establishment of the communication between the first and the third terminal is performed during a communication session and **in that** the step of establishing the communication between the first and the second terminal comprises a step of modifying at least one parameter of said session.

8. Method of processing according to Claim 7, in which the session comprises an identifier of third terminal and the modifying step comprises the replacing of the identifier of third terminal by an identifier of second terminal.

9. Supervision device, termed second terminal, able to communicate in a communication network supporting a signalling protocol of SIP type, and comprising means for transmitting a command for handover of a communication established between a first communication terminal and said supervision device to a communication between the first terminal and a third terminal, the dispatching of said handover command (M2) prompting the cutting of the communication established between the first terminal and the supervision device, said device being **characterized in that** it comprises:
- obtaining means (OBT) configured to receive, from a first terminal, an information item relating to the establishment of the communication between the first and the third terminal;
- verifying means (VER) configured to determine whether said information item indicates whether the establishment of the communication between the first and the third terminal is performed and whether at least one predefined criterion of non-establishment is satisfied;
- means (REP) for dispatching to the first terminal a command for resumption of the communication between the first terminal and the supervision device, if said information item indicates that the establishment of the communication between the first and the third terminal is performed and if at least one said criterion is satisfied.

10. Processing device, termed first terminal, able to communicate in a communication network supporting a signalling protocol of SIP type, comprising means for receiving a command for handover of a communication established between the processing device and a second communication terminal to a communication between the processing device and a third terminal, said handover command (M2) prompting the cutting of the communication between the first (B) and the second communication terminal (A) **characterized in that** it comprises:
- means for transmitting to the second terminal at least one information item relating to the establishment of the communication between the first and the third terminal;
- means for receiving a command for resumption of the communication between the processing device and the second terminal, said command being determined by the second terminal subsequent to the reception by this second terminal of an information item indicating that the establishment of the communication between the first (B) and the third terminal is not performed, if at least one predefined criterion of non-establishment (CRI) is satisfied;
- means for establishing a communication between the first and the second terminal as a function of the resumption command received.

11. Communication terminal **characterized in that** it comprises a supervision device according to Claim 9 and/or a processing device according to Claim 10.

12. Carrier signal bearing an SIP request transmitted subsequent to the dispatching of a command for handover of a communication established between a first and a second communication terminal to a communication between the first terminal and a third terminal in a communication network supporting a signalling protocol of SIP type, said handover command (M2) prompting the cutting of the communication between the first (B) and the second communication terminal (A), **characterized in that** the request is a command for resumption of the communication between the first and the second terminal according to Claim 1 or Claim 6, said command being of INVITE type and comprising a predefined resumption parameter.

13. Computer program product comprising instructions for implementing the steps of the method of supervision according to Claim 1, when it is loaded and executed by a processor.

14. Computer program product comprising instructions for implementing the steps of the method of processing according to Claim 6, when it is loaded and executed by a processor.
